# FASCICULE DE BREVET EUROPEEN

(11) **EP 0 674 679 B1**
(45) Date de publication et mention de la délivrance du brevet: **19.03.1997**
(21) Numéro de dépôt: 94902831.0
(22) Date de dépôt: 17.12.1993
(51) Int. Cl.: C08J 7/02, B01D 11/02

(54) **PROCEDE POUR ELIMINER LES POLLUANTS A BAS POIDS MOLECULAIRE CONTENUS DANS LES JOINTS ELASTOMERES ET LES MATIERES PLASTIQUES**
VERFAHREN ZUM ENTFERNEN VON NIEDERMOLEKULAREN SCHADSTOFFEN AUS ELASTOMER DICHTUNGEN UND KUNSTSTOFFEN
METHOD FOR ELIMINATING POLLUTANTS OF LOW MOLECULAR WEIGHT CONTAINED IN ELASTOMER SEALS AND PLASTIC MATERIALS

(30) Priorité: 17.12.1992 FR 9215227
(43) Date de publication de la demande: 04.10.1995
(73) Titulaire: ETABLISSEMENTS VALOIS, F-27110 Le Neubourg (FR)
(72) Inventeur: TCHEREVATCHENKOFF, André, F-27110 Le Neubourg (FR); PERRE, Christian, F-26700 Pierrelatte (FR)
(74) Mandataire: Pinguet, André
(86) Numéro de dépôt international: FR9301265
(87) Numéro de publication internationale: WO9413733

(56) Documents cités:
- WO-A-93/12161
- DE-A- 3 938 877
- FR-A- 2 638 098

## Description

La présente invention concerne un procédé pour éliminer les polluants contenus dans les joints élastomères et les matières plastiques, et plus particulièrement, un procédé de décompression faisant partie du procédé d'élimination et formant une étape ultérieure au procédé d'extraction proprement dit.

Il est bien connu que la polymérisation des élastomères et matières plastiques laisse subsister au sein de l'élastomère ou de la matière plastique des monomères et des polymères de faible degré, généralement toxiques. En outre, dans le cas des élastomères, on utilise des agents de cuisson, à base de soufre ou de peroxydes, et d'autres additifs qui produisent des résidus toxiques au sein de l'élastomère.

Ces résidus toxiques, tout comme les monomères et polymères de faible degré susmentionnés, ont un faible poids moléculaire par rapport aux polymères constituant la matière plastique ou élastomère.

Lorsque des pièces en élastomère ou en matière plastique sont destinées à entrer en contact avec certaines substances pharmaceutiques fragiles, ou qui doivent rester très pures, il est connu d'extraire les polluants de faible poids moléculaire au moyen d'un solvant avant de mettre en oeuvre les pièces en élastomère ou en matière plastique, pour éviter que les polluants ne se mélangent à la substance pharmaceutique.

Ce procédé est utilisé en particulier pour les joints en élastomères destinés aux valves aérosol. En effet, les gaz propulseurs liquéfiés des aérosols, jusqu'ici des CFC, sont de très bons solvants, et donc risquent de solvater les polluants contenus dans les joints élastomères et de les mélanger aux substances pharmaceutiques qui sont elles-aussi solvatées ou en suspension dans ledit gaz propulseur liquéfié. Le même problème peut se poser vis-à-vis des pièces en matière plastique en contact avec le gaz propulseur liquéfié. Ce problème peut se poser vis-à-vis des pièces en matière plastique ou en élastomère qui entrent en contact avec des substances actives fragiles associées à un solvant quelconque (alcool, eau, etc.).

Jusqu'à peu de temps, les solvants les plus fréquemment utilisés pour extraire les polluants avant la mise en oeuvre des joints étaient des CFC (fréon 11 notamment), qui donnaient des résultats satisfaisants, mais qui ont un effet néfaste sur la couche d'ozone de l'atmopshère, de sorte qu'ils doivent être abandonnés.

Le CO₂, sous forme liquide ou supercritique, a déjà été utilisé dans des procédés d'extraction divers : extraction de la caféine (documents FR-A-2 133 957, FR-A-2 176 008, FR-A-2 394 547 et FR-A-2 361 824), extraction des principes actifs du houblon, (GB-A-1 388 581, GB-A-1 557 123, US-A- 4 212 895, US-4 104 409), extraction des huiles et des graisses, extraction des alcools (FR-A-2 505 616, FR-A-2 505 868, DE-A-2 992 067), purification des matériaux solides et en particulier des céramiques (US-A-4 731 208, JP-A-62 27860, JP-A-63 134574), récupération de solvants de produits pétroliers, extraction de arômes et parfums. En France, l'utilisation du C02 supercritique a été développée en particulier par le Commissariat à l'Energie Atomique, titulaire notamment des brevets FR-A-2 586 938, FR-A-2 628 983 et FR-A-2 674 872 .

Les avantages du CO₂ supercritique sont sa température d'extraction facilement accessible, sa grande volatibilité, sa non-toxicité, sa faible rétroactivité chimique, et son faible coût. Les avantages supplémentaires spécifiques de l'état supercritique du CO₂ sont sa faible viscosité, qui diminue la dépense énergétique nécessaire à sa circulation, et sa diffusivité élevée, qui accroît la vitesse d'extraction.

Le CO₂ supercritique répond également aux exigences en matière d'environnement, car beaucoup moins polluant que les CFC, présumés responsables de la déterrioration de la couche d'ozone.

Il est en particulier connu de la demande de brevet SCHERING WO 93/12161 d'extraire les additifs résiduels contenus dans les articles élastomériques en mettant ces derniers en contact avec un fluide à l'état supercritique. Cette demande cite notamment le CO₂ comme agent d'extraction. Le procédé d'extraction divulgué est appliqué aux organes élastomériques constitutifs de dispositifs de distribution tels que des aérosols à usage médicinal ou pharmaceutique. Les articles sont placés dans un autoclave en présence de CO₂ à l'état supercritique à une température de 35°C. Le programme de montée en pression comprend plusieurs phases d'une durée de deux minutes à des pressions toujours croissantes et une phase finale de 240 minutes à 300 bars. Schering ne donne cependant aucune information sur le mode de décompression de l'autoclave jusqu'à la pression atmosphérique.

Or, lorsqu'on utilise une procédure normale de décompression, c'est-à-dire sans isothermicité et sans débit caloporteur de CO₂, cela provoque un abaissement de température important dans l'autoclave (température inférieure à 0°C), ce qui provoque une liquéfaction du CO₂ inclus dans l'élastomère (CO₂ en phase dense). Etant donné la rapidité de la décompression - du refroidissement - et de la remise à température ambiante, inférieure à 30 minutes en général, le CO₂ n'a pas le temps de sortir des joints. La remise à température ambiante provoque une vaporisation rapide de ce CO₂ liquide, donc une augmentation de volume entraînant le gouflement du joint, la formation de boursouflures locales et de cloques (de taille macroscopique ou microscopique selon la rapidité de la décompression).

Il est évident que ce phénomène rend le joint inutilisable.

Le problème technique qui se pose est donc de garantir une bonne conservation des propriétés mécaniques des pièces, et en particulier d'éviter ou d'éliminer l'apparition de cloques en surface des pièces.

Selon l'invention, ce problème est résolu par un procédé d'élimination des polluants de faible poids moléculaire contenus dans une pièce dont le matériau de base est choisi dans le groupe constitué des matières plastiques et des matières élastomériques, ledit procédé comportant une étape d'extraction des polluants par immersion de la pièce dans du CO₂ à l'état supercritique, caractérisé en ce que l'étape d'extraction au CO₂ supercritique est suivie par une étape de décompression lente isotherme dans le CO₂, jusqu'à la pression atmopshérique, sur une durée comprise entre 30 minutes et 16 heures, à une température supérieure à 31°C. Avantageusement, ladite étape de décompression lente est conduite à une température déterminée comprise entre 40°C et 60°C, indépendamment de la température du CO₂ supercritique pendant ladite étape d'extraction. Selon un premier mode de mise en oeuvre, ladite étape d'extraction est conduite à une pression supérieure à 8 Mpa, ladite étape de décompression lente isotherme est immédiatement précédée d'une étape de décompression, rapide et isotherme, jusqu'à 8 Mpa. Avantageusement, ladite étape de décompression rapide est conduite sur une durée qui n'est pas supérieure à une heure.

Selon un second mode de mise en oeuvre de l'invention, ladite étape de décompression lente comprend :
a) une première étape de décompression isotherme au cours de laquelle la pression est ramenée d'une valeur voisine de 220 bars à une valeur voisine de 70 bars, à raison de 0,3 à 4 bars par minute tout en maintenant la température constante par un débit caloporteur en CO₂ supercritique de 2 à 10 kg de CO₂ supercritique par kg de pièce extraite par heure,
b) une seconde étape de décompression isotherme au cours de laquelle la pression est ramenée d'une valeur voisine de 70 bars à une valeur voisine de la pression atmophérique à raison de 0,05 à 0,4 bar par minute.

De préférence, ladite première étape de décompression comprend :
a) une première phase de décompression au cours de laquelle la pression est ramenée d'une valeur voisine de 220 bars à une valeur voisine de 120 bars à raison de 2 bars par minute environ à une température de 55°C maintenue constante par un débit caloporteur en CO₂ supercritique d'environ 5 kg de CO₂ supercritique par kg de pièce extraite par heure,
b) une seconde phase de décompression au cours de laquelle la pression est ramenée d'une valeur voisine de 120 bars à une valeur voisine de 70 bars à raison de 0,4 bar par minute environ à une température de 55°C maintenue constante par un débit caloporteur en CO₂ supercritique d'environ 5kg de CO₂ supercritique par kg de pièce extraite par heure.

Ladite seconde étape de décompression comprend :
a) une première phase de décompression au cours de laquelle la pression est ramenée d'une valeur voisine de 70 bars à une valeur voisine de 30 bars à raison de 0,3 bar par minute environ, et
b) une seconde phase de compression au cours de laquelle la pression est ramenée d'une valeur voisine de 30 bars à la pression atmosphérique à raison de 0,13 bar par minute environ.

L'alimentation caloporteuse en CO₂ supercritique apportée à l'autoclave durant la première étape de décompression permet de diminuer la pression sans pour autant diminuer la température. L'unité utilisée est un débit massique de CO₂ supercritique.

D'autres caractéristiques et avantages de l'invention apparaîtront au cours de la description détaillée suivante d'un exemple de réalisation de l'invention, donné à titre non limitatif, en regard des dessins joints.

Sur les dessins :
- la figure 1 est un diagramme d'état du CO₂,
- la figure 2 est un schéma de principe de l'appareillage utilisé pour mettre en oeuvre le procédé selon l'invention,
- la figure 3 est un graphe de comparaison des chemins de décompression directe pour une décompression normale et une décompression selon l'invention,
- la figure 4 est un diagramme représentant le pourcentage de "BHT" restant après traitement, en fonction du produit de la densité du CO₂ supercritique utilisé par la durée de l'extraction.

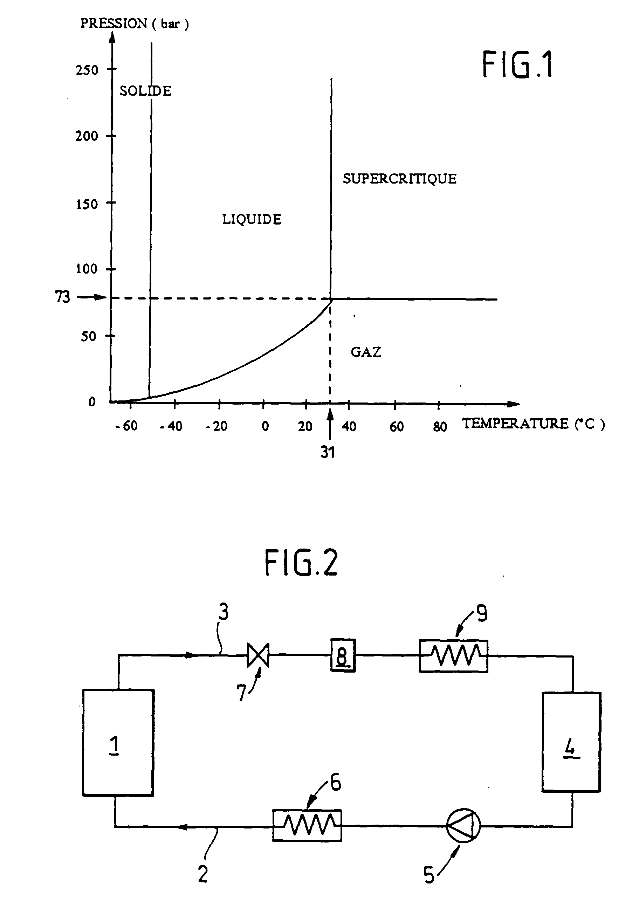

La figure 1 montre le domaine dans lequel le CO₂ est dans un état supercritique : il s'agit du domaine dans lequel la pression est supérieure à 7,3 MPa (73 bars) et la température est supérieure à 31°C.

La figure 2 représente schématiquement un exemple d'appareillage utilisé pour éliminer les polluants de faible poids moléculaire contenus dans des pièces en matière plastique ou en élastomère. Cet appareillage comprend un autoclave ou cuve de pression 1, adaptée à recevoir un lot de pièces à traiter, et connectée à une canalisation d'entrée 2 et une canalisation de sortie 3. La canalisation d'entrée 2 reçoit du CO₂ depuis un réservoir 4 de CO₂ liquide, et ladite canalisation d'entrée 2 comporte un compresseur 5 pour comprimer le CO₂ au-dessus de 7,3 Mpa, en série avec un échangeur de chaleur 6 pour élever la température du CO₂ au-dessus de 31°C. La canalisation de sortie comporte une vanne de détente 7 en amont d'un séparateur 8, pour collecter les polluants extraits. Le CO₂ provenant du séparateur 8 est ensuite liquéfié par refroidissement dans un échangeur de chaleur 9 avant d'être stocké dans le réservoir 4.

Lorsqu'on veut traiter un lot de pièces en matière plastique ou en élastomère, on place le lot de pièces dans l'autoclave 1, on établit une pression de CO₂ supérieure à 7,3 Mpa (étape de compression) et une température supérieure à 31°C, puis on fait circuler dans l'autoclave 1 du CO₂ supercritique, par le circuit décrit ci-dessus, en séparant les polluants extraits par le CO₂ (étape d'extraction, à température et pression sensiblement constantes). On ramène enfin l'autoclave de pression 1 à pression atmosphérique et température ambiante (étape de décompression), après quoi l'autoclave est ouvert, et les pièces sont enlevées de la cuve. Un cycle complet d'élimination des polluants est ainsi décrit de manière synthétique.

Bien que ce procédé d'élimination selon l'invention comprenne deux étapes distinctes consécutives, seule l'étape de décompression sera développée et explicitée en détail. L'étape d'extraction relevant quant à elle d'une démarche plus ou moins classique, elle ne sera évoquée que pour une meilleure compréhension du procédé d'ensemble.

Une approche théorique de l'étape de décompression selon l'invention et des avantages qui en découlent sera d'abord effectuée en comparaison avec une procédure classique de décompression. Des essais comparatifs entre les deux procédures sus-visées et d'autres encore seront ensuite présentés et commentés.

Contrairement aux décompressions normales effectuées sans isothermicité et sans alimentation caloportrice aucune, la décompression définie par l'invention est conduite de manière isotherme avec une allure de décompression que l'on peut qualifier dans l'ensemble de lente. IL est en effet primordial pour une bonne conservation des propriétés physiques des pièces à traiter que la masse volumétrique du CO₂ ne varie pas de façon trop importante, c'est-à-dire qu'il ne se crée pas de vaporisation du CO₂ dans la pièce. En outre, il faut que l'opération de décompression soit menée à une température constante de valeur telle que le CO₂ ne connaisse pas d'état biphasique de coexistence des phases gazeuse et liquide, ce qui nuirait aux qualités de la pièce à purifier.

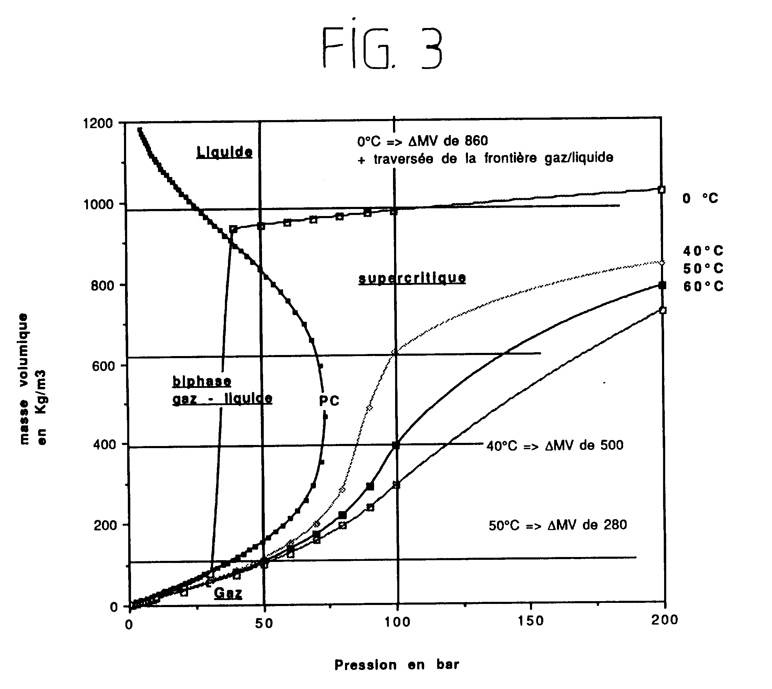

Par conséquent, à l'approche du domaine d'état biphasique, comme on peut le voir sur la figure 3, il est indispensable de contrôler la décompression en la maintenant isotherme. Pour ce faire, la décompression doit être effectuée à un rythme lent.

Il est donc envisageable de procéder à une décompression isotherme rapide de l'ordre de quelques minutes, par palier de 10 bars par exemple, jusqu'à l'approche du domaine d'état biphasique environ 80 bars. Ensuite, une décompression lente isothermne doit succéder jusqu'à la pression atmosphérique dans un laps de temps de 16 heures environ.

La lenteur de la décompression permet d'éviter une augmentation rapide du volume de CO₂ inclus dans le joint en caoutchouc lors du passage à l'état gazeux (en dessous de 7,3 Mpa), ce qui laisse au CO₂ le temps de sortir du caoutchouc sans l'endommager.

Le fait que la décompression soit isotherme garantit aussi que le CO₂ ne passe jamais à l'état liquide : le liquide ayant une forte viscosité et une faible diffusivité, le CO₂ aurait alors tendance à rester dans le joint pendant la décompression, d'où une plus forte augmentation du volume du CO₂ lors du passage à l'état gazeux, et des risques de détérioration du joint.

Lors d'essais qui seront présentés ci-après, les dimensions des joints ont été conservées. On note seulement un léger gonflement dû à l'inclusion de CO₂ gazeux dans les joints, mais ce gonflement disparaît au bout de quelques heures. On a pu également noter de légères déformations des joints ou l'apparition de micro-cloques en surface, sans conséquence pour l'aspect ou l'efficacité des joints.

Bien qu'une décompression isotherme rapide préalable puisse être mise en oeuvre, le mode opératoire préféré de la présente invention prévoit une décompression lente en plusieurs étapes distinctes à partir de la pression initiale de l'autoclave après extraction (= 220 bars) jusqu'à la pression atmosphérique. Les différentes étapes seront entièrement décrites ci-après lors de la présentation des essais. Selon ce mode, la température est maintenue parfaitement constante au cours de la phase de décompression jusqu'à 70 bars environ en alimentant l'autoclave avec un débit caloporteur en CO₂ supercritique. Par la suite, il ne sera fait référence qu'à ce mode préféré de mise en oeuvre de l'invention, sauf avis contraire.

Pour une meilleure perception des avantages découlant de cette méthode de décompression, une comparaison entre une décompression normale et la procédure de décompression mise au point pour le traitement d'élimination selon l'invention est visualisée par le graphe de la figure 3.

Ce graphe qui porte en isothermes les variations de masse volumique en kg/m³ (avec ou sans changement d'état) en fonction de la pression en bars (divisé par 10 pour obtenir des MPa) montre les différentes voies de décompression possibles. Seule la durée de l'opération de décompression n'apparaît pas et sera indiquée pour chacune des voies choisies.

La voie 1 indique une décompression normale avec passage par l'état liquide total ou partiel, c'est-à-dire un état biphasique où les phases gazeuse et liquide coexistent. Cette opération de taille industrielle dure moins de 30 minutes et la vaporisation qui suit est en général plus rapide. Celle-ci présente les inconvénients suivants :
- refroidissement excessif du polymère,
- inclusion de CO₂ liquide dans la matrice,
- vaporisation rapide avec gonflement (facteur 3 par exemple) et déchirement.

On constate que la variation de masse volumique en moins de 30 minutes est de l'ordre de 800 à 900.

La voie 2 représente le mode de décompression de l'invention à des températures thermostatées de 40, 50 et 60°C. Les avantages évidents par rapport à la voie précédente sont:
- un étalement de la variation de densité plus homogène,
- une parfaite continuité entre l'état supercritique et l'état gazeux sans passage par l'état liquide très dense,
- une graduation de la durée en fonction de la variation de la masse volumique (relativement rapide au-dessus de 100 bars, plus lentes en dessous),
- un rapport calorifique constant et homogène en conservant le débit de CO₂ régulé à 50 ou 60°C et en utilisant les qualités caloportrices du CO₂ bien connues par ailleurs.

La différence de masse volumique ΔMV répartie sur une durée double ou plus de celle de la voie 1 est alors de moins de 300 (zone critique 100 à 50 bars) et les mécanismes diffusionnels de dégazage en sont grandement facilités.

Les raisons du choix d'une décompression à 50°C ou plus sont également montrés par le graphe du moins pour la décompression :
- isotherme 40°C : ΔMV entre 100 et 50 bars = 500 environ
- isotherme 50°C : ΔMV entre 100 et 50 bars = 280 environ
- isotherme 60°C : ΔMV entre 100 et 50 bars = 200 environ

### Essais comparatifs.

**1°)** Le tableau 1 ci-après illustre les résultats d'essais effectués sur des joints de valve aérosol en caoutchouc et diverses pièces en caouctchouc. Le traitement mis en oeuvre utilisait une décompression rapide suivie d'une décompression lente comme définie préalablement.

Les joints traités ont été soumis à trois types d'essais mécaniques :
- résistance au déchirement : essai en traction sur une bande de caoutchouc ayant une entaille latérale en V qui sert d'amorce au déchirement,
- résistance en traction,
- résistance en traction après vieillissement à 80°C pendant 28 jours.

A correspond à un échantillon témoin de caoutchouc non traité.

B correspond à un échantillon traité au CFC 11.

Les essais 1 à 10 correspondent à des extractions au CO₂ supercritique.

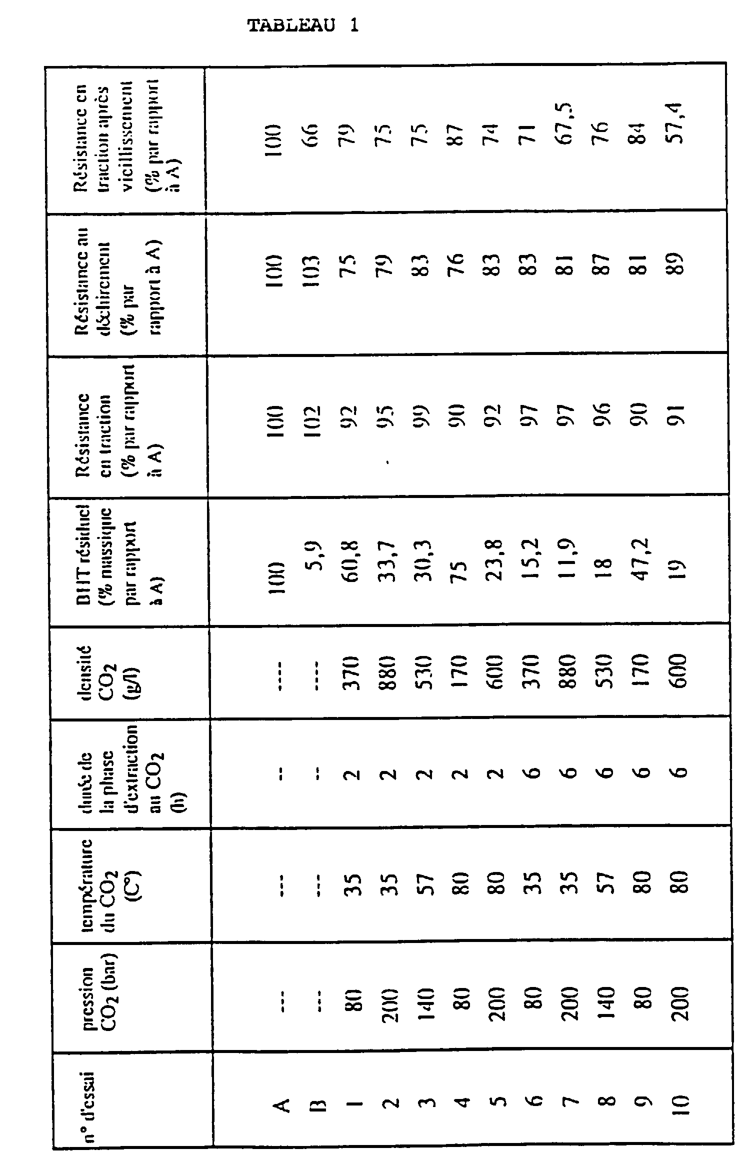

On a mesuré l'efficacité de l'extraction sur le "BHT" qui est un anti-oxydant entrant dans la composition du caoutchouc. On constate que l'extraction au CO₂ supercritique est légèrement moins efficace que l'extraction au CFC 11, mais qu'elle peut néanmoins atteindre des résultats excellents, notamment au voisinage de 35°C et 20 Mpa pour 6 heures d'extraction.

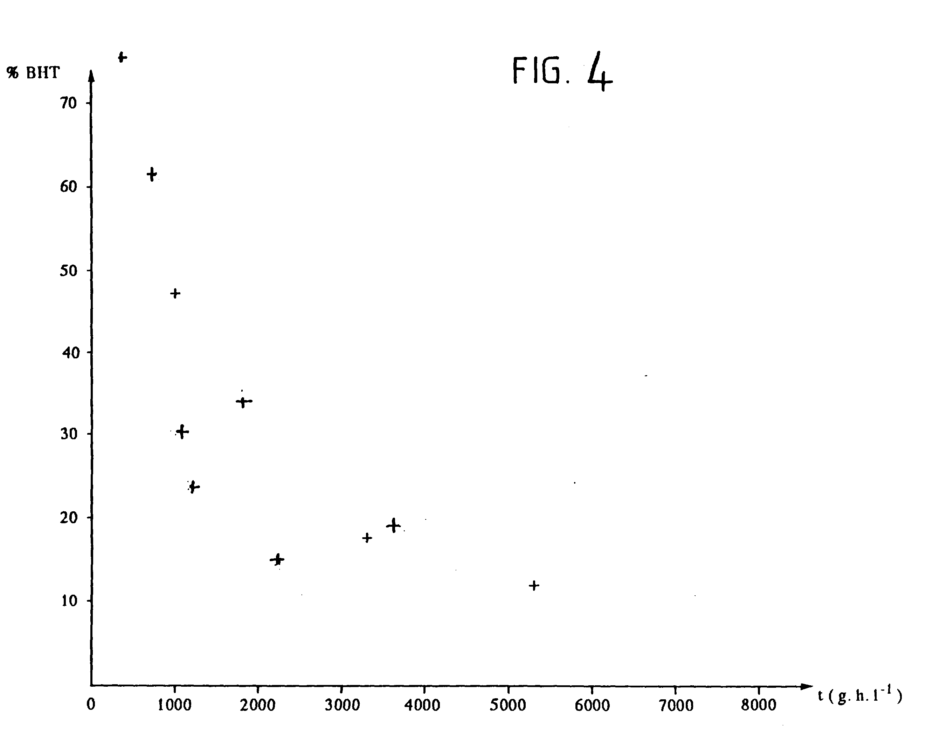

Sur la figure 4, on a représenté sur un graphe le pourcentage de "BHT" résiduel en % massique par rapport au BHT initialement présent dans le caoutchouc, en fonction du produit de la durée de la phase d'extraction (t) par la masse volumique (p) du CO₂. La durée t de la phase d'extraction est le temps pendant lequel les pièces sont restées immergées dans le CO₂ supercritique à température et pression sensiblement constantes (c'est-à-dire après la montée en pression initiale du CO₂, et avant la décompression finale). La densité p du CO₂ considérée est la densité du CO₂ supercritique pendant ladite étape d'extraction.

On constate que la résistance en traction est comparable à celle obtenue par traitement au CFC 11, la résistance en traction après vieillissement est meilleure que celle obtenue avec du CFC 11, sauf pour l'essai n°.10, et la résistance au déchirement est légèrement inférieure à celle obtenue avec le CFC 11, sans que l'écart soit gênant pour l'efficacité des joints.

Le CO₂ supercritique n'altère donc pas sensiblement les propriétés mécaniques des joints.

La durée de la décompression lente peut être diminuée en phase industrielle : on pense qu'elle doit généralement être comprise entre 30 minutes et 16 heures.

Afin d'éviter toute incursion dans le domaine liquide, la décompression a été effectuée à une température déterminée comprise entre 40 et 60°C, quelle que soit la température du CO₂ pendant la phase d'extraction. L'isothermicité n'était pas parfaite, mais tout de même acceptable dans le domaine précité.

On envisage aussi d'adjoindre au CO₂ un cosolvant polaire, par exemple de l'eau ou un alcool, pour mieux extraire les polluants polaires.

2°) Une deuxième série d'essais a été réalisée en mettant en oeuvre le mode favori de l'invention, c'est-à-dire celui n'incluant pas de décompression rapide mais au contraire contrôlée et parfaitement thermostatée à une température constante. Un essai réel a également été effectué dans le cas d'une décompression normale classique dans le but de faire ressortir clairement les avantages de la procédure selon l'invention.

L'autoclave utilisé est d'une contenance de 200 litres et la charge en produit y est placée dans un panier spécifique, de conception propre, comprenant six étages séparés de façon à éviter un écrasement et une expansion sous contrainte lors de l'extraction des joints situés en partie basse.

Un premier essai 1 a été réalisé dans les conditions suivantes :
- charge en produit : 50 kg
- pression d'extraction : 220 bars
- température d'extraction : 35°C
- débit CO₂ : 500 à 600 kg/H
- taux de solvant total : 60 kg de CO₂/kg de charge.

Chronologie de l'essai :
- montée de pression (0/220 b) : 45 minutes
- extraction à 220 b : 5 heures.

Une fois, l'extraction terminée, la phase de décompression complexe est mise en oeuvre selon la procédure chronologique suivante :
- phase de décompression 1 :
   . montée de la tempéraure de 35°C à 55°C
   . circulation caloporteuse de CO₂ à 300 kg/h
   . diminution de la pression de 200 b à 120b à raison de 2b/mn
   . durée de la phase 1 : 50 minutes.
- phase de décompression 2 :
   . décompression de 120b à 70b à raison de 2b/5 m en circulation caloporteuse CO₂ à 300 kg/h
   . à 70b arrêt de la pompe CO₂ et équilibrage progressif entre extracteur et séparateurs
   . durée de la phase 2 : 2 heures 30 minutes.
- phase de décompression 3 :
   . décompression de 70b à 1b par vanne manuelle à raison de 5b/15mn pendant 2 heures puis 2b/5mn ensuite.
   . durée de la phase 3 : 5 heures 45 minutes.

Le temps totale de l'essai s'établit à 15 heures environ.

La température dans l'extracteur n'a subi quasiment aucune variation durant la décompression, ce qui a donné une décompression isotherme. Ceci a été rendu possible par rapport au caloporteur en CO₂ durant les phases 1 et 2.

Un extrait très odorant a été récupéré dans les séparateurs pour un rendement d'environ 0,5% comparable à celui obtenu par extraction au CFC 11.

L'aspect visuel des joints après traitement est excellent (pas de défaut visible dû à la décompression).

Un deuxième essai a été réalisé dans un contexte un peu différent au point de vue de la charge puisque celle-ci a été mise en vrac dans un panier classique et non dans un panier à étage tel que précédemment.

L'essentiel de la charge était constitué de matière de remplissage déjà utilisé, seuls les joints servant aux test mécaniques étant neufs.

La charge était de 60 kg avec des joints de tests répartis à trois niveaux : bas de panier, milieu et haut de panier. Pour mieux visualiser les éventuels défauts de surface, ont été placées également deux grandes plaques d'élastomère (10 cm x 20 cm).

Les conditions opératoires (pression, température, débit de CO₂, taux de solvant, etc.) ont été strictement identiques à l'essai 1. Seule la décompression a été conduite de manière différente, à savoir :
- arrêt de la pompe CO₂,
- équilibrage de la pression avec l'extracteur suivant (comme en production normale). Cela donne un passage de 200 bars à 80 bars en 20 minutes environ.

Le temps total de décompression s'établit à 45 minutes environ, temps au terme duquel le panier est sorti de l'extracteur.

La décompression n'a pas été isotherme puisqu'on note une chute de 5 à 10°C au niveau de la température mesurée. La température de paroi sur le panier avant vidange des joints est de 12°C en bas, 25°C en milieu, 18°C en haut.

Des mesures de température ont été effectuées à l'intérieur du panier lors de la vidange et de la récupération des échantillons : on a ainsi mesuré à 12°C en fond de panier, 7°C au milieu et 2,5°C en haut.

Au niveau de l'aspect visuel, les joints, quelque soient leurs formes et dimensions, présentent tous les défauts de surface : cloquages, boursouflures, déformations. Les caractéristiques mécaniques ont été testées et reportées dans le tableau 3 ci-dessous qui offre une comparaison des performances des joints selon le mode de détente. Les qualités mécaniques des joints ont été estimées sur la base de cinq critères, à savoir la dureté, la contrainte, la résistance au déchirement et la rupture et la présence de cloques ou non.

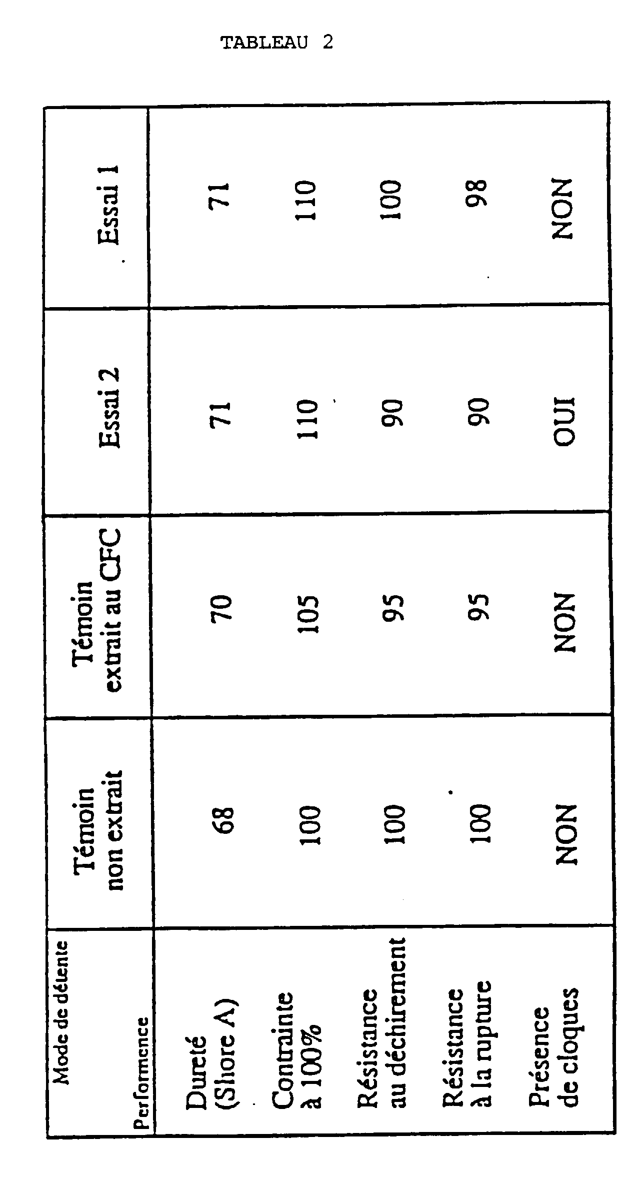

### CONCLUSION

a) Quelque que soit le mode d'extraction, le fait de retirer des produits de bas poids moléculaire favorise la rigidification du matériau élastomérique. Cependant, par rappon au témoin extrait au CFC, les résultats de l'essai 1 sont tout aussi performants et même meilleurs dans la plupart des cas. Le mode d'élimination selon l'invention constitue donc une bonne alternative au traitement par CFC jugé polluant.
b) Par rapport à l'essai 1, l'essai 2 dégrade le matériau sur plusieurs critères. La résistance au déchirement et à la rupture est notamment affectée, ceci n'est attribuable qu'au mode de décompression, la procédure d'extraction étant la même dans les essais 1 et 2. La présence de cloques signifie que le matériau est fendu en strates. Ceci a également une conséquence sur l'étanchéité, du joint extrait, car cette structure stratifiée favorise le passage des gaz. On peut donc s'attendre à de mauvaises performances du joint extrait selon l'essai 2 en qualité d'étanchéité.

Un test d'étanchéité a par ailleurs été effectué sur les joints de l'essai 1, du témoin non extrait et du témoin extrait au CFC. Les joints ont été montés dans une valve doseuse. La perte en mg par an a été de 10 pour le témoin non traité, 170 pour le joint de l'essai 1 et de 18 pour le témoin extrait au CFC.

La microporosité engendrée par l'extraction de certains produits nuit de façon évidente à l'étanchéité du joint, quelque que soit l'agent d'extraction utilisé. Cependant, les performances de l'essai 1 sont comparables à celles du témoin extrait au CFC.

Les qualités mécaniques des pièces extraites ne dépendent donc pas uniquement de l'agent d'extraction ou du mode opératoire d'extraction mais encore et surtout de la procédure de décompression ultérieure.

## Revendications

1. Procédé d'élimination des polluants de faible poids moléculaire contenus dans une pièce dont le matériau de base est choisi dans le groupe constitué des matières plastiques et des matières élastomériques, ledit procédé comportant une étape d'extraction des polluants par immersion de la pièce dans du CO₂ à l'état supercritique, caractérisé en ce que l'étape d'extraction au CO₂ supercritique est suivie par une étape de décompression lente isotherme dans le CO₂, jusqu'à la pression atmopshérique, sur une durée comprise entre 30 minutes et 16 heures, à une température supérieure à 31°C.

2. Procédé selon la revendication 1, dans lequel ladite étape de décompression lente est conduite à une température déterminée comprise entre 40°C et 60°C, indépendamment de la température du CO₂ supercritique pendant ladite étape d'extraction.

3. Procédé selon la revendication 1 ou 2, dans lequel ladite étape d'extraction est conduite à une pression supérieure à 8 Mpa, ladite étape de décompression lente isotherme est immédiatement précédée d'une étape de décompression, rapide et isotherme, jusqu'à 8 Mpa.

4. Procédé selon la revendication 3, dans lequel ladite étape de décompression rapide est conduite sur une durée qui n'est pas supérieure à une heure.

5. Procédé selon la revendication 1 ou 2, dans lequel ladite étape de décompression lente comprend :
a) une première étape de décompression isotherme au cours de laquelle la pression est ramenée d'une valeur voisine de 220 bars à une valeur voisine de 70 bars, à raison de 0,3 à 4 bars par minute tout en maintenant la température constante par un débit caloporteur en CO₂ supercritique de 2 à 10 kg de CO₂ supercritique par kg de pièce extraite par heure.
b) une seconde étape de décompression isotherme au cours de laquelle la pression est ramenée d'une valeur voisine de 70 bars à une valeur voisine de la pression atmophérique à raison de 0,05 à 0,4 bar par minute.

6. Procédé selon la revendication 5, dans lequel ladite première étape de décompression comprend :
a) une première phase de décompression au cours de laquelle la pression est ramenée d'une valeur voisine de 220 bars à une valeur voisine de 120 bars à raison de 2 bars par minute environ à une température de 55°C maintenue constante par un débit caloporteur en CO₂ supercritique d'environ 5 kg de CO₂ supercritique par kg de pièce extraite par heure,
b) une seconde phase de décompression au cours de laquelle la pression est ramenée d'une valeur voisine de 120 bars à une valeur voisine de 70 bars à raison de 0,4 bar par heure environ à une température de 55°C maintenue constante par un débit caloporteur en CO₂ supercritique d'environ 5kg de CO₂ supercritique par kg de pièce extraite par heure.

7. Procédé selon la revendication 5, dans lequel ladite seconde étape de décompression comprend :
a) une première phase de décompression au cours de laquelle la pression est ramenée d'une valeur voisine de 70 bars à une valeur voisine de 30 bars à raison de 0,3 bar par minute environ, et
b) une seconde phase de compression au cours de laquelle la pression est ramenée d'une valeur voisine de 30 bars à la pression atmosphérique à raison de 0,13 bar par minute environ.

8. Procédé selon la revendication 7, dans lequel la décompression de ladite seconde étape de décompression est réalisée en créant une fuite contrôlée de CO₂ au moyen d'une vanne manuelle.

## Patentansprüche

1. Verfahren zum Entfernen von Verunreinigungen mit niederem Molekulargewicht, die in einem Werkstück enthalten sind, dessen Basismaterial aus der Gruppe ausgewählt ist, die von Kunststoffen und elstomeren Materialien gebildet wird, wobei dieses Verfahren einen Extraktionsschritt der Verunreinigungen durch Eintauchen des Werkstückes in CO₂ im superkritischen Zustand umfaßt, dadurch **gekennzeichnet,** daß auf den Extraktionsschritt im superkritischen CO₂ ein Schritt der langsamen isothermen Dekompression im CO₂ bis auf den Atmosphärendruck mit einer Dauer zwischen 30 Minuten und 16 Stunden und bei einer Temperatur oberhalb von 31°C folgt.

2. Verfahren nach Anspruch 1, bei dem der Schritt der langsamen Dekompression bei einer Temperatur zwischen 40°C und 60°C erfolgt, die unabhängig von der Temperatur des superkritischen CO₂ während des Extraktionsschrittes festgelegt ist.

3. Verfahren nach Anspruch 1 oder 2, bei dem der Extraktionsschritt bei einem Druck oberhalb von 8 Mpa durchgeführt wird, wobei diesem Schritt der langsamen isothermen Dekompression unmittelbar ein Schritt einer schnellen und isothermen Dekompression bis auf 8 Mpa vorausgeht.

4. Verfahren nach Anspruch 3, bei dem der Schritt der schnellen Dekompression über einen Zeitraum hinweg durchgeführt wird, der nicht größer als eine Stunde ist.

5. Verfahren nach Anspruch 1 oder 2, bei dem der Schritt der langsamen Dekompression folgendes umfaßt:
a) einen ersten isothermen Dekompressionsschritt, in dessen Verlauf der Druck von einem Wert in der Nähe von 220 bar auf einen Wert in der Nähe von 70 bar mit einer Rate von 0,3 bis 4 bar pro Minute zurückgeführt wird, wobei die Temperatur mit Hilfe einer als Wärmeübertrager dienenden Abflußmenge von superkritischem CO₂ von 2 bis 10 kg an superkritischem CO₂ pro Kilogramm des zu extrahierenden Werkstückes pro Stunde konstant gehalten wird, und
b) einen zweiten isothermen Dekompressionsschritt, während dessen Verlauf der Druck von einem Wert in der Nähe von 70 bar auf einen Wert in der Nähe des Atmosphärendrucks mit einer Rate von 0,05 bis 0,4 bar pro Minute abgesenkt wird.

6. Verfahren nach Anspruch 5, bei dem der erste Dekompressionsschritt folgendes umfaßt:
a) eine erste Dekompressionsphase in deren Verlauf der Druck von einem Wert in der Nähe von 220 bar auf einen Wert in der Nähe von 120 bar mit einer Rate von 2 bar pro Minute im Mittel bei einer Temperatur von 55°C abgesenkt wird, die mit Hilfe einer als Wärmeträger dienenden Abflußmenge von superkritischem CO₂ von ungefähr 5 kg von superkritischem CO₂ pro Kilogramm des zu extrahierenden Werkstückes pro Stunde konstant gehalten wird, und
b) eine zweite Dekompressionsphase in deren Verlauf der Druck von einem Wert in der Nähe von 120 bar auf einen Wert in der Nähe von 70 bar mit einer Rate von 0,4 bar pro Stunde im Mittel bei einer Temperatur von 55°C abgesenkt wird, die mit Hilfe einer als Wärmeträger dienenden Abflußmenge von superkritischem CO₂ von ungefähr 5 kg von superkritischem CO₂ pro Kilogramm des zu extrahierenden Werkstückes pro Stunde konstant gehalten wird.

7. Verfahren nach Anspruch 5, bei dem der zweite Dekompressionsschritt folgendes umfaßt:
a) eine erste Dekompressionsphase während derer der Druck von einem Wert in der Nähe von 70 bar auf einen Wert in der Nähe von 30 bar mit einer Rate von ungefähr 0,3 bar pro Minute abgesenkt wird und
b) eine zweite Dekompressionsphase in deren Verlauf der Druck von einem Wert in der Nähe von 30 bar auf den Atmosphärendruck mit einer Rate von ungefähr 0,13 bar pro Minute abgesenkt wird.

8. Verfahren nach Anspruch 7, bei dem die Dekompression des zweiten Dekompressionsschrittes in der Weise durchgeführt wird, daß ein kontrolliertes Abströmen des CO₂ mit Hilfe eines von Hand gesteuerten Ventils durchgeführt wird.

## Claims

1. A method of eliminating low molecular weight pollutants contained in a part made of a base material selected from the group constituted by plastics materials and elastomer materials, said method including a step of extracting the pollutants by immersing the part in CO₂ in the supercritical state, the method being characterized in that the step of extraction using supercritical CO₂ is followed by a step of slow isothermal decompression in CO₂ down to atmospheric pressure, over a period of time lying in the range 30 minutes to 16 hours, and at a temperature greater than 31°C.

2. A method according to claim 1, in which said step of slow decompression is performed at a determined temperature lying in the range 40°C to 60°C, independently of the temperature of the supercritical CO₂ during said extraction step.

3. A method according to claim 1 or 2, in which said extraction step is performed at a pressure greater than 8 MPa, said step of slow isothermal decompression being immediately preceded by a step of fast anisothermal decompression down to 8 MPa.

4. A method according to claim 3, in which said step of fast decompression is performed over a period that does not exceed 1 hour.

5. A method according to claim 1 or 2, in which said step of slow decompression comprises:
a) a first isothermal decompression step during which the pressure is brought down from a value close to 220 bars to a value close to 70 bars at a rate of 0.3 to 4 bars per minute while maintaining the temperature constant by a heat-conveying flow of supercritical CO₂ at a rate of 2 to 10 kg of supercritical CO₂ per hour and per kg of parts being subjected to extraction; and
b) a second isothermal decompression step during which the pressure is brought down from a value close to 70 bars to a value close to atmospheric pressure at a rate of 0.05 to 0.4 bars per minute.

6. A method according to claim 5, in which said first decompression step comprises:
a) a first decompression stage during which the pressure is brought down from a value close to 220 bars to a value close to 120 bars at a rate of about 2 bars per minute and at a temperature of 55°C which is kept constant by a heat-conveying flow of supercritical CO₂ at a rate of about 5 kg of supercritical CO₂ per hour and per kg of parts being subjected to extraction; and
b) a second decompression stage during which said pressure is brought down from a value close to 120 bars to a value close to 70 bars at a rate of about 0.4 bars per hour and at a temperature of 55°C kept constant by a heat-conveying flow of supercritical CO₂ of about 5 kg of supercritical CO₂ per hour and per kg of parts being subjected to extraction.

7. A method according to claim 5, in which said second decompression step comprises:
a) a first decompression stage during which said pressure is brought down from a value close to 70 bars to a value close to 30 bars at a rate of about 0.3 bars per minute; and
b) a second decompression stage during which the pressure is brought down from a value close to 30 bars to atmospheric pressure at a rate of about 0.13 bars per minute.

8. A method according to claim 7, in which the decompression of said second decompression step is achieved by establishing a controlled leak of CO₂ by means of a manually-controlled valve.
